# NEW EUROPEAN PATENT SPECIFICATION

(11) **EP 0 153 280 B2**
(45) Date of publication and mention of the opposition decision: **23.06.1993**
(45) Mention of the grant of the patent: 07.09.1988
(21) Application number: 85830011.4
(22) Date of filing: 17.01.1985
(51) Int. Cl.: F16D 55/02, F16D 65/02

(54) **Friction pad assembly for use in a disc brake for vehicles**
Bremsbackenanordnung für Anwendung in Kraftfahrzeugscheibenbremse
Disposition de patin de friction à appliquer dans un frein à disque pour véhicules

(30) Priority: 19.01.1984 IT 5285384 U; 19.03.1984 IT 5314484 U
(43) Date of publication of application: 28.08.1985
(73) Proprietor: METAL-FREN SOCIETA' ITALIANA LAVORAZIONE MATERIALE D'ATTRITO di Ing. Bruno e Antonio DONETTI S.n.c., 10090 Rosta (Torino) (IT)
(72) Inventor: Donetti, Bruno, I-10146 Torino (IT); Donetti, Antonio, I-10090 Rosta (Torino) (IT)
(74) Representative: Jacobacci, Filippo

(56) References cited:
- EP-A- 0 089 750
- DE-A- 2 558 141
- DE-A- 2 930 601
- DE-A- 2 937 149
- DE-A- 3 200 390
- DE-A- 3 220 632
- DE-C- 2 845 959
- FR-A- 1 592 881
- FR-A- 2 371 606
- GB-A- 1 219 778
- GB-A- 1 585 806

## Description

The present invention relates to a friction pad assembly for vehicle disk brakes comprising a backing plate having lateral shoulders adapted to slide along guides formed in the brake caliper and a central tab on its upper edge, a pad of friction material fixed to one of the main faces of the backing plate, and hold-down spring means formed from a single piece of wire having two ends and supported by the backing plate in correspondence with the tab, the spring means including two sprung arms extending outwardly in a V-shape from an attachment part which partially surrounds the tab and comprises two substantially U-shaped facing parts; the two sprung arms being partly adjacent the main face of the tab which is on the same side as the pad of friction material.

The term "hold-down spring" is intended to mean a spring arranged to bias the backing plate against the guides with which the disc brake is provided so that the pad can slide towards and away from the disc during use of the vehicle. Since there is normally a clearance between the guides and the pad, the purpose of the spring is to avoid rattling of the pad relative to the guides and the noise resulting from such rattling.

A friction pad assembly of the above mentioned type is known from DE-A-2 937 142, which shows in the example of figure 9 a hold-down spring having a partially rectangular attachment part, which lies in a plane perpendicular to the backing plate, and two sprung arms extending outwardly and upwardly from said attachment part. Each side face of a central tab on the backing plate is provided, at the basis of the tab, with a undercut groove for receiving the side portions of said attachment part. Fitting of the spring on the backing plate therefore requires a previous stretching of the attachment part, in order to allow its side portions to snap into said side grooves of the tab.

In such types of friction pad assemblies the thickness of the metal backing plate is at most 5 mm and the diameter of the wire from which the hold-down spring is formed is at least 1.7 mm.

Therefore, taking also into account the required bending radius of the wire between the side portions and the front and rear portions of the attachment part, the side grooves provided in the tab according to the teaching of DE-A-2937 149 cannot prevent in use a snap disengagement of the attachment part of the spring from the tab.

The object of the present invention is to provide a friction pad assembly of the type specified above in which the attachment part of the spring means is not subject of stretching during assembly on the backing plate and, when assembled, is not subject in use to the risk of disengagement from the backing plate.

This object is achieved by the characteristics which constitutes the subject of claim 1.

Further characteristics and advantages of the present invention will become apparent from the detailed description which follows with reference to the appended drawings, provided purely by way of nonlimiting example, in which:
Figure 1 is a perspective view of a friction pad assembly for disc brake of a motor vehicle according to the present invention;
Figure 2 is a perspective view of the spring used in the pad of Figure 1;
Figure 3 is a perspective view of the opposite side of the friction pad assembly illustrated in Figure 1;
Figure 4 is a perspective view of Figure 1, without the biasing spring, and
Figure 5 is a partial section taken on the line V-V of Figure 4.

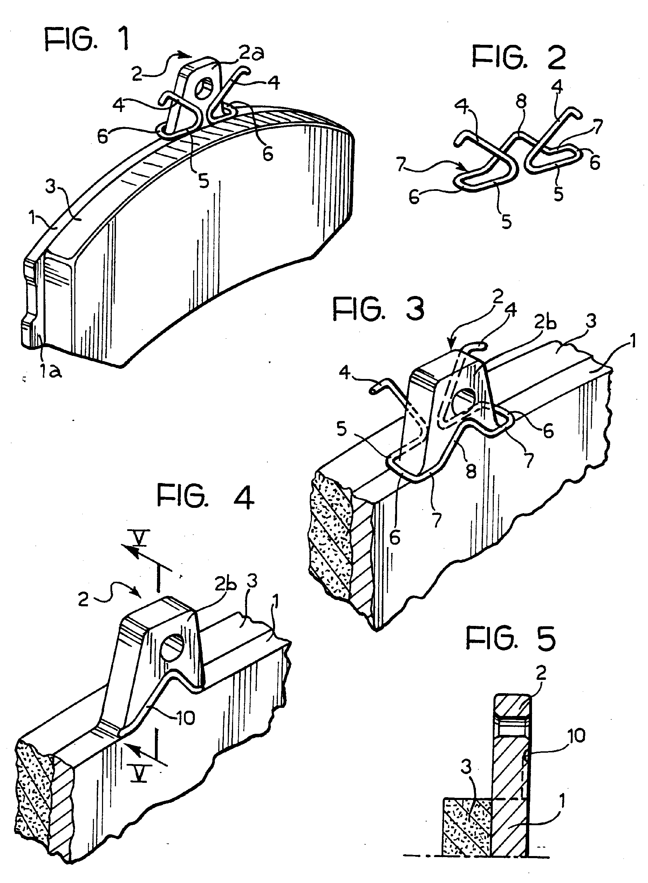

As illustrated in Figures 1 to 3, a friction pad assembly for disc brakes comprises a metal backing plate having a central tab 2 and a pad 3 of friction material fixed to one of the faces of the plate 1.

The plate 1 has lateral shoulders 1a which, when the friction pad is fitted to a sliding caliper disc brake, are supported on guides so that the pad can slide towards and away from the disc.

The pad has a hold-down spring which biases the shoulders 1a against the guides to prevent rattling of the pad during use of the brake and the noise resulting from this rattling.

The hold-down spring is formed from wire and comprises two sprung arms 4 which are partly adjacent the face 2a of the tab 2 facing the friction pad 3 and extend upwardly in a V-shape from a substantially C-shape attachment part 5, 6,7,8 which partially surrounds the base of the tab 2 and lies in a plane substantially perpendicular to the backing plate 1.

The attachment part comprises two substantially U-shaped facing parts comprising a horizontal portion 5 adjacent the face 2a, a lateral portion 6, a substantially horizontal portion 7 adjacent the opposite face 2b of the tab 2, and a non-rectilinear connecting part 8 joining the ends of the two U-shaped parts opposite the sprung arms 4 and adjacent the face 2b.

Preferably, as illustrated in the drawings, the connecting part 8 is V-shaped with its vertex uppermost.

As illustrated in Figures 4 and 5, the rear face 2b of the central tab 2 has a shaped groove 10 with the same profile as the two portions 7 and the connecting part 8.

The groove 10 serves to house the parts 7 and 8 of the spring illustrate in Figures 1 to 3 so that these parts do not project from the surface of the backing plate on which the piston of the hydraulic operating cylinder of the pad acts in use.

Preferably, the groove 10 is formed by coining.

The spring described above may be easily fitted to and removed from the backing plate, occupies a very small space and, by virtue of the particular above-described form coupling with the backing plate, cannot, in its assembled position, move relative to the backing plate except for deformations due to flexing of the sprung arms 4.

## Claims

1. Friction pad assembly for vehicle disc brakes comprising a backing plate (1) having lateral shoulders (1a) adapted to slide along guides formed in the brake caliper and a central tab (2) on its upper edge, a pad (3) of friction material fixed to one of the main faces of the backing plate (1), and hold-down spring means formed from a single piece of wire having two ends and supported by the backing plate (1) in correspondence with the tab (2), the spring means including two sprung arms (4) extending outwardly in a V-shape from an attachment part (5, 6, 7,8) which partially surrounds the tab (2) and comprises two substantially U-shaped facing parts (5, 6, 7) the two sprung arms (4) being partly adjacent the main face (2a) of the tab (2) which is on the same side as the pad (3) of friction material, characterised in that
- the portion (8) of the attachment part which is adjacent the other main face (2b) of the tab (2) opposite the pad (3) and interconnects said U-shaped facing parts (5,6, 7) has a non-rectilinear configuration, and
- the tab (2) has a shaped groove (10) in said other main face (2b) which houses the ends (7, 7) of the two U-shaped parts (5, 6, 7) opposite the sprung arms (4) and the non-rectilinear connecting part (8) of the spring means.

2. Friction pad according to claim 1, characterised in that the groove (10) is formed by coining.

3. Friction pad assembly according to Claim 1, characterised in that the spring means are constituted by a spring in which the attachment part is substantially C-shaped with the two substantially U-shaped facing parts (5,6, 7) lying in a plane substantially perpendicular to the backing plate (1) and the non-rectilinear connecting part (8) which joins the ends of the two U-shaped parts opposite the sprung arms (4) lying in a plane parallel to the plane of the backing plate (1) and being V-shaped with its vertex uppermost.

## Patentansprüche

1. Bremsbackenanordnung für Fahrzeugscheibenbremsen, die eine Stützplatte (1) mit seitlichen Schultern (1 a), die so angepaßt sind, daß sie entlang im Bremssattel geformten Führungen geschoben werden, sowie einen zentralen Vorsprung (2) an ihrem oberen Rand, eine Backe (3) aus Friktionsmaterial, die an einer der Hauptflächen der Stützplatte (1) befestigt ist, sowie Niederhaltefedermittel aufweist, die aus einem einzigen, zwei Enden aufweisenden Drahtstück gebildet und von der Stützplatte (1) in Zuordnung zu dem Vorsprung (2) getragen wird, wobei die Federmittel zwei Federarme (4) aufweisen, die sich in einer V-Form nach außen von einem Befestigungsteil (5,6,7,8) aus erstrecken, das den Vorsprung (2) teilweise umgibt und zwei im wesentlichen U-förmige Stirnteile (5,6,7) besitzt, wobei die beiden Federarme (4) sich teilweise nahe der Hauptfläche (2a) des Vorsprungs, die auf der gleichen Seite wie die Backe (3) aus Friktionsmaterial liegt, befinden, dadurch gekennzeichnet,
- daß derAbschnitt (8) des Befestigungsteils, welcher sich nahe der anderen Hauptfläche (2b) des Vorsprungs (2) gegenüber der Backe (3) befindet und die U-förmigen Stirnteile (5,6,7) verbindet, einen nichtgeradlinigen Verlauf hat, und
- daß der Vorsprung (2) eine geformte Nut (10) in der genannten anderen Hauptfläche (2b) aufweist, die die gegenüber den Federarmen (4) befindlichen Enden (7,7) der beiden U-förmigen Teile und den nichtgeradlinigen Verbindungsteil (8) der Federmittel aufnimmt.

2. Bremsbackenanordnung nach Anspruch 1, dadurch gekennzeichnet, daß die Nut (10) durch Prägen erzeugt wird.

3. Bremsbackenanordnung nach Anspruch 1, dadurch gekennzeichnet, daß die Federmittel durch eine Feder gebildet sind, bei welcher das Befestigungsteil im wesentlichen C-förmig ist, wobei die zwei im wesentlichen U-förmigen Stirnteile (5,6,7) in einer im wesentlichen senkrecht zu der Stützplatte (1) verlaufenden Ebene liegen, und wobei das nicht-geradlinige Verbindungsteil, welches die Enden der beiden U-förmigen Teile gegenüber den Federarmen (4) verbindet, in einer Ebene parallel zu der Ebene der Stützplatte (1) liegt und eine V-Form mit oben liegender Spitze ist.

## Revendications

1. Ensemble garniture de friction pour freins à disque de véhicules, comprenant une plaquette support (1) munie d'épaulements latéraux (1a) conçus pour coulisser le long de guides formés dans l'étrier du frein et d'une patte centrale (2) sur son bord supérieur, une garniture en matière de friction (3) fixée à l'une des faces principales de la plaquette support (1) et des moyens presseurs élastiques formés d'un seul morceau de fil métallique qui possède deux extrémités et supportés par la plaquette support (1) au niveau de la patte centrale (2), les moyens élastiques comprenant deux bras à ressort (4) qui s'étendent vers l'extérieur en formant un V, en partant d'une partie de fixation (5, 6, 7, 8) qui entoure partiellement la patte centrale (2) et qui comprend deux parties (5, 6, 7) sensiblement en forme de U opposées face à face, les deux bras à ressort (4) étant partiellement adjacents à la face principale (2a) de la patte (2) qui est du même côté que la garniture en matière de friction (3), caractérisé en ce que la portion (8) de la partie de fixation qui est adjacente à l'autre face principale (2b) de la patte (2) opposée à la garniture (3) et qui relie lesdites parties en U opposées face à face (5, 6, 7) possède une configuration non rectiligne, et la patte (2) présente, dans l'autre face principale (2b), une rainure profilée (10) qui reçoit les extrémités (7, 7) des deux parties en forme de U (5, 6, 7) qui sont à l'opposé des bras à ressort (4) et la partie de liaison non rectiligne (8) des moyens élastiques.

2. Ensemble garniture de friction selon la revendication 1, caractérisé en ce que la rainure (10) est formée par matriçage.

3. Ensemble garniture de friction selon la revendication 1, caractérisé en ce que les moyens élastiques sont constitués par un ressort dans lequel la partie de fixation est sensiblement en forme de C, les deux parties sensiblement en U (5, 6, 7) qui sont opposées face à face étant contenues dans un plan sensiblement perpendiculaire à la plaquette support (1) et la partie de liaison non rectiligne (8) qui réunit les extrémités des deux parties en U qui sont à l'opposé des bras élastiques (4) étant contenue dans un plan parallèle au plan de la plaquette support (1) et étant en forme de V avec sa pointe en position haute.
